# FASCICULE DE BREVET EUROPEEN

(11) **EP 3 840 996 B1**
(45) Date de publication et mention de la délivrance du brevet: **28.06.2023**
(21) Numéro de dépôt: 19753133.8
(22) Date de dépôt: 01.07.2019
(51) Int. Cl.: B60W 30/18, G08G 1/0967, B60W 50/14

(54) **ASSISTANCE À LA CONDUITE D'UN VÉHICULE LORS D'UN PASSAGE DE FEU TRICOLORE, PAR AFFICHAGE DE SES COULEURS EN COURS ET FUTURE**
FAHRERASSISTENZHILFE FÜR EIN FAHRZEUG BEIM PASSIEREN EINER AMPEL DURCH ANZEIGE IHRER AKTUELLEN UND ZUKÜNFTIGEN FARBEN
DRIVING ASSISTANCE FOR A VEHICLE WHEN PASSING A TRAFFIC LIGHT, BY DISPLAYING ITS CURRENT AND FUTURE COLOURS

(30) Priorité: 24.08.2018 FR 1857639
(43) Date de publication de la demande: 30.06.2021
(73) Titulaire: PSA Automobiles SA, 78300 Poissy (FR)
(72) Inventeur: POGNON, Jean Luc, 92800 PUTEAUX (FR); BERTRAND, Emmanuel, 78100 ST GERMAIN EN LAYE (FR); MAFRICA, Stefano, 75013 PARIS 13 (FR)
(86) Numéro de dépôt international: PCT/FR2019/051620
(87) Numéro de publication internationale: WO 2020/039129

(56) Documents cités:
- DE-A1-102008 020 728
- DE-A1-102015 204 122
- DE-U1-202014 001 053
- US-A1- 2005 134 478
- US-A1- 2018 075 739

## Description

L'invention concerne les véhicules, éventuellement de type automobile, et plus précisément l'assistance à la conduite de tels véhicules.

Il est connu de US2005/134478 un système de feux de circulation intelligent.

Lorsqu'un véhicule se dirige vers un feu tricolore d'une voie de circulation, son conducteur ne sait pas quand ce feu tricolore va changer de phase de lumière (notamment d'une phase de lumière rouge à une phase de lumière verte et d'une phase de lumière verte à une phase de lumière orange). Par conséquent, lorsque le véhicule arrive au niveau de ce feu tricolore il arrive fréquemment que ce dernier passe d'une phase de lumière verte à une phase de lumière orange qui oblige son conducteur à l'arrêter, ce qui n'est pas toujours possible compte tenu de sa vitesse en cours et/ou de sa capacité de freinage et/ou des conditions météorologiques et/ou des conditions de circulation et/ou du temps de réaction du conducteur.

Par ailleurs, lorsque le conducteur d'un véhicule aperçoit de loin qu'un feu tricolore est dans une phase de lumière rouge, il arrive fréquemment qu'il freine son véhicule au dernier moment en induisant son arrêt car il avait espéré que ce feu tricolore serait entre temps passé dans une phase de lumière verte. Cela est dommage car un ralentissement anticipé du véhicule aurait éventuellement permis au feu tricolore de passer en phase de lumière verte sans qu'il ne soit arrêté, et donc aurait permis d'améliorer le confort des passagers tout en induisant une réduction de la consommation d'énergie et de l'usure du véhicule.

Dans le but d'assister les conducteurs lors du passage à un feu tricolore, il a été proposé d'équiper les feux tricolores d'un module de communication émettant par voie d'ondes, à destination des véhicules voisins, des messages contenant des informations de signalisation définissant les durées respectives de leurs trois phases de lumière (rouge, verte et orange) et la durée restante de la phase de lumière en cours. Ces informations de signalisation permettent, comme proposé dans le document brevet US 8,972,076, de déterminer dans un véhicule qui s'approche d'un feu tricolore émetteur s'il existe une vitesse limite inférieure à une vitesse maximale autorisée sur la voie de circulation empruntée et permettant de passer ce feu tricolore pendant une phase de lumière verte en cours définie par les informations émises. Ainsi, dans l'affirmative, il est possible de proposer cette vitesse limite déterminée au conducteur qui décide alors librement d'en tenir compte ou non.

Ce type d'assistance au conducteur s'avère cependant moyennement intéressant du fait qu'il ne propose pas de solution lorsqu'il n'est pas possible de déterminer une vitesse limite du fait d'un passage imminent du feu tricolore en phase de lumière rouge ou du très récent passage du feu tricolore en phase de lumière rouge. De plus, informer seulement le conducteur sur une vitesse limite s'avère assez réducteur car il peut l'interpréter comme une obligation de rouler à cette vitesse limite.

Une récente solution permet d'afficher la phase de lumière en cours du feu tricolore dont on s'approche et la durée restant avant que ce dernier change de phase de lumière. Mais cette solution impose que le trajet du véhicule ait été préalablement renseigné dans le dispositif d'aide à la navigation. De plus, certaines législations interdisent l'affichage de la durée restant avant qu'un feu tricolore change de phase de lumière.

L'invention a notamment pour but d'améliorer la situation.

Elle propose notamment à cet effet un procédé d'assistance, d'une part, permettant d'assister la conduite d'un véhicule comprenant un module de communication échangeant des messages par voie d'ondes et se déplaçant sur une voie de circulation ayant une vitesse maximale autorisée et comprenant un feu tricolore comportant un module de communication émettant par voie d'ondes des messages contenant des informations définissant les durées respectives de trois phases de lumières rouge, verte et orange et la durée restante de la phase de lumière en cours, et, d'autre part, comprenant une étape dans laquelle on affiche sur au moins un écran embarqué dans le véhicule la phase de lumière en cours de ce feu tricolore.

Dans l'étape de ce procédé, on détermine une information comportementale représentative d'un conseil de comportement de conduite à suivre pour franchir ce feu tricolore, compte tenu d'une distance séparant le véhicule de ce feu tricolore, de cette durée restante de la phase de lumière en cours et de cette vitesse maximale autorisée, on affiche aussi, à proximité de la phase de lumière en cours du feu tricolore, cette information comportementale déterminée et une future phase de lumière qu'aura le feu tricolore quand le véhicule parviendra au niveau de ce dernier si le conseil de comportement est respecté, et on affiche l'information comportementale déterminée entre les phases de lumière en cours et future du feu tricolore.

Grâce à cet affichage d'informations relatives aux états en cours et futur du prochain feu tricolore et d'une information comportementale relative à la conduite, le conducteur peut désormais adapter sa vitesse en fonction du contexte, en toute sécurité.

Le procédé d'assistance selon l'invention peut comporter d'autres caractéristiques qui peuvent être prises séparément ou en combinaison, et notamment:
- dans son étape on peut aussi afficher la distance (véhicule/feu) à proximité des phases de lumière en cours et future du feu tricolore et de l'information comportementale déterminée ;
- dans son étape on peut déterminer une information comportementale qui est choisie parmi un conseil de poursuite de conduite à la vitesse en cours du véhicule pour franchir le feu tricolore dans une phase de lumière verte sans arrêter le véhicule, un conseil d'arrêt du véhicule au feu tricolore dans une phase de lumière rouge, et un conseil de conduite du véhicule à une vitesse au plus égale à une vitesse limite inférieure à la vitesse maximale autorisée ;
   ➢ dans son étape on peut déterminer un conseil de conduite du véhicule à une vitesse qui est comprise dans un intervalle borné par une vitesse minimale, strictement inférieure à la vitesse limite, et par cette vitesse limite ;
- dans son étape on peut afficher l'information comportementale sur une flèche épaisse remplie d'une couleur identique à celle de la future phase de lumière ;
- dans son étape on peut aussi afficher la durée restante de la phase de lumière en cours du feu tricolore.

L'invention propose également un produit programme d'ordinateur comprenant un jeu d'instructions qui, lorsqu'il est exécuté par des moyens de traitement, est propre à mettre en oeuvre un procédé d'assistance du type de celui présenté ci-avant pour assister à la conduite d'un véhicule lors d'un franchissement de feu tricolore associé à une voie de circulation sur laquelle circule ce véhicule.

L'invention propose également un dispositif d'assistance, d'une part, destiné à assister la conduite d'un véhicule comprenant un module de communication échangeant des messages par voie d'ondes et se déplaçant sur une voie de circulation ayant une vitesse maximale autorisée et comprenant un feu tricolore comportant un module de communication émettant par voie d'ondes des messages contenant des informations définissant les durées respectives de trois phases de lumières rouge, verte et orange et la durée restante de la phase de lumière en cours, et, d'autre part, comprenant au moins un processeur déclenchant l'affichage de la phase de lumière en cours de ce feu tricolore par au moins un écran présent dans le véhicule.

Ce dispositif d'assistance se caractérise par le fait que son processeur détermine aussi une information comportementale représentative d'un conseil de comportement de conduite à suivre pour franchir le feu tricolore, compte tenu de cette distance, de cette durée restante de la phase de lumière en cours et de cette vitesse maximale autorisée, et déclenche aussi l'affichage par l'écran, à proximité de la phase de lumière en cours du feu tricolore, de cette information comportementale déterminée et d'une future phase de lumière qu'aura le feu tricolore quand le véhicule parviendra au niveau de ce dernier si le conseil de comportement est respecté.

L'invention propose également un véhicule, éventuellement de type automobile, et comprenant, d'une part, un module de communication échangeant des messages par voie d'ondes et propre à se déplacer sur une voie de circulation ayant une vitesse maximale autorisée et comprenant un feu tricolore comportant un module de communication émettant par voie d'ondes des messages contenant des informations définissant les durées respectives de trois phases de lumières rouge, verte et orange et la durée restante de la phase de lumière en cours, et, d'autre part, un dispositif d'assistance du type de celui présenté ci-avant.

D'autres caractéristiques et avantages de l'invention apparaîtront à l'examen de la description détaillée ci-après, et des dessins annexés, sur lesquels :
- la figure 1 illustre schématiquement et fonctionnellement un véhicule, circulant sur l'une des deux voies de circulation d'une route à double sens et aboutissant à une intersection équipée de feux tricolores, et équipé d'un module de communication, d'un dispositif d'aide à la navigation et d'un exemple de réalisation d'un dispositif d'assistance selon l'invention,
- la figure 2 illustre schématiquement un premier exemple d'affichage d'informations en partie déterminées par un dispositif d'assistance selon l'invention, en présence d'un feu tricolore,
- la figure 3 illustre schématiquement un deuxième exemple d'affichage d'informations en partie déterminées par un dispositif d'assistance selon l'invention, en présence d'un feu tricolore,
- la figure 4 illustre schématiquement un troisième exemple d'affichage d'informations en partie déterminées par un dispositif d'assistance selon l'invention, en présence d'un feu tricolore sélectionné parmi deux feux tricolores par le conducteur d'un véhicule, et
- la figure 5 illustre schématiquement un exemple d'algorithme mettant en oeuvre un procédé d'assistance selon l'invention.

L'invention a notamment pour but de proposer un procédé d'assistance, et un dispositif d'assistance DA associé, destinés à permettre d'assister la conduite d'un véhicule V lors d'un franchissement d'un feu tricolore FT associé à une voie de circulation VCj.

Dans ce qui suit, on considère, à titre d'exemple non limitatif, que le véhicule V est de type automobile. Il s'agit par exemple d'une voiture. Mais l'invention n'est pas limitée à ce type de véhicule. Elle concerne en effet tout type de véhicule pouvant circuler sur des voies de circulation terrestres. Ainsi, elle concerne également et notamment les motocyclettes, les autocars, les camions, les véhicules utilitaires, les engins de voirie et les engins de chantier.

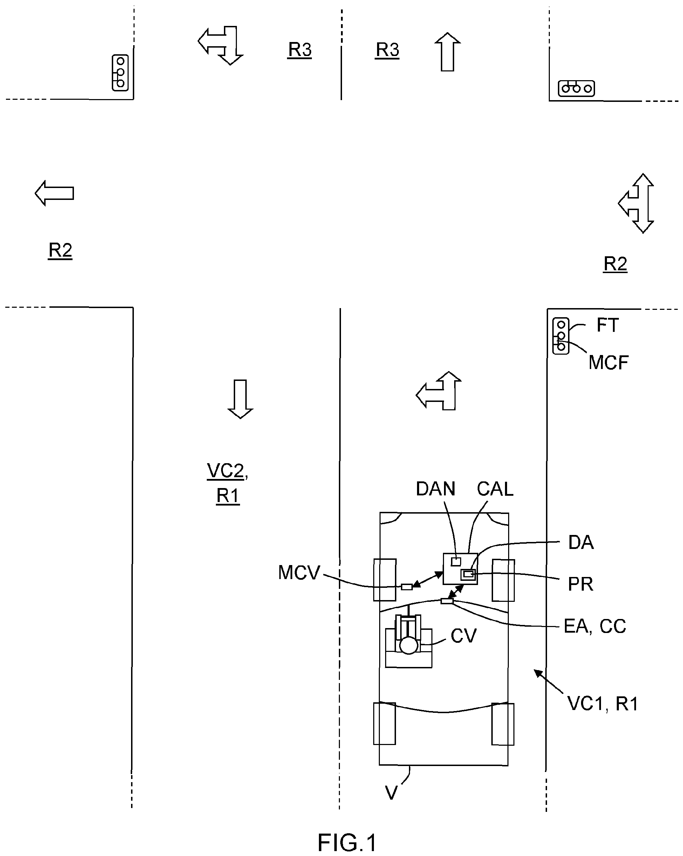

On a schématiquement représenté sur la figure 1 une intersection entre une première route R1, comprenant des première VC1 (j = 1) et seconde VC2 (j = 2) voies de circulation ayant des sens de circulation opposés, une deuxième route R2 comprenant une unique voie de circulation ayant un unique sens de circulation allant de la droite vers la gauche, et une troisième route R3 située en face de la première route et comprenant deux voies de circulation ayant des sens de circulation opposés.

La première voie de circulation VC1 de la première route R1 est ici associée, à titre d'exemple, à un feu tricolore FT au niveau de l'intersection, permet de traverser cette dernière en allant tout droit pour rejoindre l'une des voies de circulation de la troisième route R3 ou de tourner à gauche dans l'unique voie de circulation de la deuxième route R2, et a une vitesse maximale autorisée vma dans la portion contenant ce feu tricolore FT. Le véhicule V circule sur la première voie de circulation VC1, et donc se dirige vers l'intersection pour aller tout droit ou tourner à gauche.

La partie droite de la voie de circulation de la deuxième route R2 est ici associée, à titre d'exemple, à un feu tricolore au niveau de l'intersection, et permet de tourner à droite dans l'une des voies de circulation de la troisième route R3, ou de traverser l'intersection en allant tout droit pour rejoindre la partie gauche de la voie de circulation de sa deuxième route R2, ou encore de tourner à gauche dans la seconde voie de circulation VC2 de la première route R1.

La voie de circulation de gauche de la troisième route R3 est ici associée, à titre d'exemple, à un feu tricolore au niveau de l'intersection, et permet de traverser cette dernière en allant tout droit pour rejoindre la seconde voie de circulation VC2 de la première route R1, ou de tourner à droite dans l'unique voie de circulation de la deuxième route R2.

Au moins le feu tricolore FT intervenant dans l'invention comprend un module de communication MCF agencé de manière à au moins émettre par voie d'ondes des messages contenant des informations qui définissent les durées respectives d'une phase de lumière rouge, d'une phase de lumière verte et d'une phase de lumière orange, ainsi que la durée restante dr de la phase de lumière en cours.

Le véhicule V est équipé d'un module de communication MCV agencé de manière à au moins recevoir par voie d'ondes à courte portée les messages émis par le module de communication MCF du feu tricolore FT peu éloigné. On notera que ce module de communication MCV peut être également agencé pour émettre des messages par voie d'ondes à courte portée à destination du feu tricolore FT et/ou échanger des messages par voie d'ondes à courte portée avec d'autres véhicules et/ou avec des stations ou serveurs de l'infrastructure routière et/ou échanger des messages par voie d'ondes avec des réseaux mobiles. Par exemple, les communications par voie d'ondes à courte portée peuvent se faire en utilisant un standard de communication sans fil Car2X ou V2X ou Bluetooth ou WiFi (notamment 802.11 a à 802.11n ou ITS G5 (802.11p)) ou cellulaire xG / LTE (notamment LTE_V ou 5G).

Comme évoqué précédemment, l'invention propose notamment un procédé d'assistance destiné à permettre d'assister la conduite du véhicule V. Ce procédé comprend une étape qui peut être mise en oeuvre au moins partiellement par un dispositif d'assistance DA selon l'invention embarqué dans le véhicule V (éventuellement temporairement) et comprenant, comme illustré sur la figure 1, au moins un processeur PR.

On notera que dans l'exemple illustré non limitativement sur la figure 1, le dispositif d'assistance DA (et en particulier son processeur PR) fait partie d'un calculateur CAL, assurant éventuellement au moins une autre fonction au sein du véhicule V. Mais le dispositif d'assistance DA pourrait être un appareil électronique embarqué dans le véhicule V (éventuellement temporairement) et comportant son propre calculateur ou bien pourrait faire partie d'un téléphone mobile intelligent (ou « smartphone ») ou d'une tablette électronique embarqué(e) temporairement dans le véhicule V et capable de communiquer avec l'éventuel réseau de communication de ce dernier (V) auquel sont connectés les calculateurs du véhicule V et qui est éventuellement multiplexé.

L'étape du procédé d'assistance, selon l'invention, est déclenchée lorsque le module de communication MCV du véhicule V, circulant sur une voie de circulation VCj, associée à un feu tricolore FT (muni d'un module de communication MCF) et ayant une vitesse maximale autorisée vma, reçoit de ce feu tricolore FT des informations définissant les durées respectives de ses trois phases de lumière (rouge, verte et orange) et la durée restante dr de sa phase de lumière en cours.

La vitesse maximale autorisée vma peut être fournie par un dispositif d'aide à la navigation DAN embarqué dans le véhicule V, ou par des moyens d'analyse de l'environnement embarqués dans ce dernier (V), ou par d'autres véhicules circulant à proximité du véhicule V, ou par une station ou un serveur de l'infrastructure routière, ou encore par le feu tricolore FT.

Dans l'exemple illustré non limitativement sur la figure 1, le dispositif d'aide à la navigation DAN fait partie du calculateur CAL. Mais le dispositif d'aide à la navigation DAN pourrait être un appareil électronique embarqué dans le véhicule V (éventuellement temporairement) et comportant son propre calculateur, ou bien pourrait faire partie d'un téléphone mobile intelligent ou d'une tablette électronique embarqué(e) temporairement dans le véhicule V et capable de communiquer avec l'éventuel réseau de communication de ce dernier (V).

Dans cette étape, on (le processeur PR du dispositif d'assistance DA) détermine au moins une information comportementale ic qui est représentative d'un conseil de comportement de conduite à suivre pour franchir le feu tricolore FT, compte tenu de la distance dvf séparant le véhicule V du feu tricolore FT (à l'instant considéré), de la durée restante dr de la phase de lumière en cours (à l'instant considéré) et de la vitesse maximale autorisée vma. On comprendra que cette détermination nécessite que le processeur PR ait préalablement déterminé cette distance dvf et cette durée dr restant avant l'expiration de la phase de lumière en cours du feu tricolore FT.

L'étape du procédé se poursuit ensuite par l'affichage sur au moins un écran EA embarqué dans le véhicule V de la phase de lumière en cours du feu tricolore FT, et, à proximité de cette dernière, de l'information comportementale ic déterminée et associée à ce feu tricolore FT et d'une future phase de lumière qu'aura ce feu tricolore FT quand le véhicule V parviendra au niveau de ce dernier FT si le conseil de comportement (représenté par ic) est respecté. C'est le processeur PR qui déclenche cet affichage.

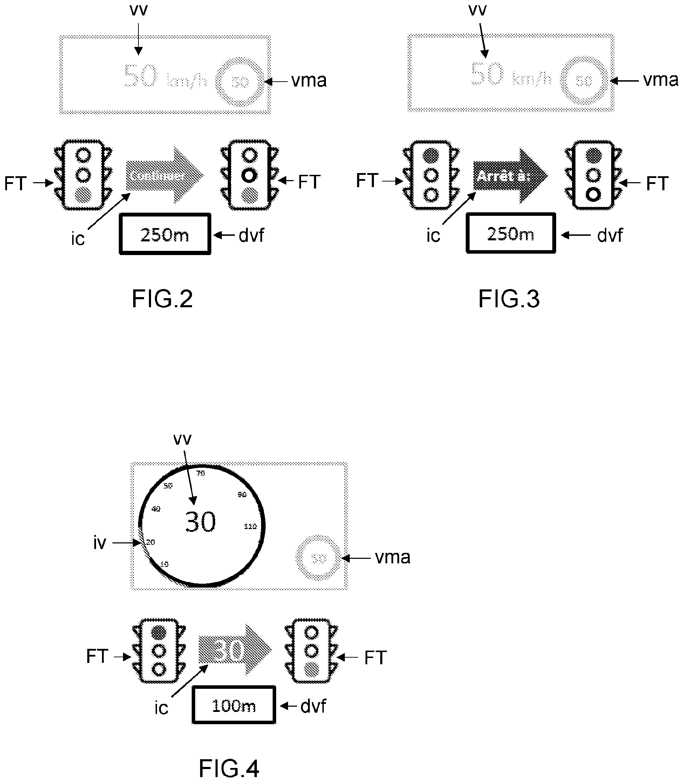

Dans les exemples illustrés non limitativement sur les figures 2 à 4, le feu tricolore FT avec sa phase de lumière en cours est affiché à gauche tandis que le feu tricolore FT avec sa future phase de lumière est affiché à droite et au même niveau que celui du feu tricolore FT avec sa phase de lumière en cours. Mais l'inverse est également possible. Dans une autre variante d'affichage, le feu tricolore FT avec sa phase de lumière en cours pourrait être affiché au-dessus ou au-dessous du feu tricolore FT avec sa future phase de lumière. Il s'agit ici d'une question de convention choisie (éventuellement par le conducteur lors d'une configuration).

Par ailleurs, dans les exemples illustrés non limitativement sur les figures 2 à 4, la phase de lumière en cours affichée d'un feu tricolore FT est matérialisée par la couleur de cette phase au sein d'une représentation schématique de ce feu tricolore FT. Dans la réalité les couleurs verte, rouge et orange sont respectivement représentées par des couleurs verte, rouge et orange, mais sur les dessins des figures 2 à 4 les couleurs verte et rouge sont respectivement représentées par des couleurs noir et gris moyen (la couleur orange non représentée pourrait être du gris foncé). Mais, au lieu d'afficher des représentations schématiques du feu tricolore FT, on pourrait simplement afficher un premier rond rempli de la couleur de sa phase de lumière en cours et un second rond rempli de la couleur de sa future phase de lumière, par exemple.

On notera que l'écran EA peut faire partie d'un équipement implanté fixement dans le véhicule V, comme par exemple le combiné central CC (comme illustré non limitativement sur la figure 1) ou le tableau de bord, ou bien d'un équipement temporairement présent dans le véhicule V, comme par exemple un téléphone mobile intelligent ou une tablette électronique. Par ailleurs, les informations produites par le dispositif d'assistance DA peuvent être affichées sur un ou plusieurs écrans.

Comme illustré sur les figures 2 à 4, dans l'étape du procédé on affiche l'information comportementale ic déterminée pour le feu tricolore FT entre les phases de lumière en cours et future du feu tricolore FT. Cela permet de faciliter la compréhension de la fonction d'assistance. En effet, le conducteur du véhicule V comprend ainsi instantanément le lien entre les phases de lumière en cours et future du feu tricolore FT (c'est en suivant le conseil de comportement de conduite représenté par ic qu'il parviendra au feu tricolore FT dans sa future phase de lumière affichée compte tenu du fait qu'il est actuellement dans sa phase de lumière en cours affichée).

On notera également, comme illustré non limitativement sur les figures 2 à 4, que dans l'étape du procédé on peut afficher l'information comportementale ic sur une flèche épaisse remplie d'une couleur qui est identique à celle de la future phase de lumière. Cette flèche est orientée de la phase de lumière en cours vers la future phase de lumière afin de faciliter encore plus la compréhension de la fonction d'assistance. Dans ce cas, pour que le conseil de comportement de conduite soit facilement lisible, il est affiché avec une couleur différente de celle de la flèche, par exemple en blanc.

On notera également, comme illustré non limitativement sur les figures 2 à 4, que dans l'étape du procédé on peut aussi afficher la distance (véhicule/feu) dvf à proximité des phases de lumière en cours et future du feu tricolore FT et de l'information comportementale ic déterminée pour ce feu tricolore FT. C'est le processeur PR qui déclenche cet affichage.

Dans les exemples des figures 2 et 3, la distance (véhicule/feu) dvf est égale à 250 mètres, tandis que dans l'exemple de la figure 4, la distance (véhicule/feu) dvf est égale à 100 mètres.

On notera également que dans l'étape du procédé on (le processeur PR) peut déterminer une information comportementale ic qui est choisie parmi un conseil de poursuite de conduite à la vitesse en cours vv du véhicule V pour franchir le feu tricolore FT dans une phase de lumière verte sans arrêter le véhicule V, un conseil d'arrêt du véhicule V au feu tricolore FT dans une phase de lumière rouge, et un conseil de conduite du véhicule V à une vitesse qui est au plus égale à une vitesse limite vl inférieure à la vitesse maximale autorisée vma.

On comprendra que le conseil de poursuite de conduite à la vitesse en cours vv du véhicule V pour franchir le feu tricolore FT dans une phase de lumière verte sans arrêter le véhicule V, est choisi par le processeur PR lorsque le feu tricolore FT est dans une phase de lumière verte et que la durée restante dr dans cette dernière est suffisante pour que le véhicule V ait le temps de parvenir au niveau de ce feu tricolore FT avant qu'il ne change de phase de lumière (de vert à orange ou rouge), compte tenu de la distance dvf et de sa vitesse en cours vv, ou lorsque le feu tricolore FT est dans une phase de lumière rouge et que la durée restante dr dans cette dernière est suffisamment petite pour que le véhicule V ait le temps de parvenir au niveau de ce feu tricolore FT après qu'il ait changé de phase de lumière (rouge à vert), compte tenu de la distance dvf et de sa vitesse en cours vv. La première alternative est illustrée non limitativement sur la figure 2.

Par exemple, et comme illustré non limitativement sur la figure 2, le conseil de poursuite de conduite à la vitesse en cours vv du véhicule V peut être matérialisé par l'affichage du mot « continuer », de préférence en vert dans la réalité (et ici en gris moyen sur le dessin en noir et blanc).

Le conseil d'arrêt du véhicule V au feu tricolore FT dans une phase de lumière rouge est choisi par le processeur PR lorsque le feu tricolore FT est dans une phase de lumière verte et que la durée restante dr dans cette dernière est insuffisante pour que le véhicule V ait le temps de parvenir au niveau de ce feu tricolore FT avant qu'il ne change de phase de lumière (de vert à orange ou rouge), compte tenu de la distance dvf et de la vitesse limite autorisée vma, ou lorsque le feu tricolore FT est dans une phase de lumière rouge et que la durée restante dr dans cette dernière est suffisamment grande pour que le véhicule V ait le temps de parvenir au niveau de ce feu tricolore FT avant qu'il ait changé de phase de lumière (rouge à vert), compte tenu de la distance dvf et même en cas de réduction notable mais non dangereuse de sa vitesse en cours vv. La seconde alternative est illustrée non limitativement sur la figure 3.

Par exemple, et comme illustré non limitativement sur la figure 3, le conseil d'arrêt du véhicule V au feu tricolore FT peut être matérialisé par l'affichage de l'expression « arrêt à » (ou en variante seulement « arrêt »), de préférence en rouge dans la réalité (et ici en noir sur le dessin en noir et blanc).

Le conseil de conduite du véhicule V à une vitesse qui est au plus égale à une vitesse limite vl inférieure à la vitesse maximale autorisée vma est choisi par le processeur PR lorsque le feu tricolore FT est dans une phase de lumière rouge et que la durée restante dr dans cette dernière est suffisamment petite pour que le véhicule V ait le temps de parvenir au niveau de ce feu tricolore FT après qu'il ait changé de phase de lumière (rouge à vert), compte tenu de la distance dvf mais sous réserve que sa vitesse vv soit au plus égale à la vitesse limite vl. Cette situation est illustrée non limitativement sur la figure 4.

La vitesse limite vl est donc une vitesse maximale à ne pas dépasser pour atteindre le feu à un moment où il sera dans une phase de lumière verte. Rouler à une vitesse supérieure à cette vitesse limite vl impliquera que le conducteur arrivera au feu alors qu'il sera encore dans une phase de lumière rouge et donc qu'il devra s'arrêter puis redémarrer lorsqu'il passera dans une phase de lumière verte. Ce conseil vise donc à inciter le conducteur à ralentir, pour passer « au vert » en toute fluidité.

Le choix de ce dernier conseil nécessite que le processeur PR ait préalablement déterminé (en fonction notamment de ces durée restante dr et distance dvf) s'il existe une vitesse limite vl inférieure à cette vitesse maximale autorisée vma et permettant au véhicule V de passer (ou franchir) le feu tricolore FT, associé à cette voie de circulation VCj, pendant une phase de lumière verte suivant une phase de lumière rouge en cours. Toute méthode connue de l'homme de l'art et permettant de déterminer la vitesse limite vl peut être ici utilisée.

Par exemple, et comme illustré non limitativement sur la figure 4, le conseil de conduite du véhicule V à une vitesse qui est au plus égale à une vitesse limite vl peut être matérialisé par l'affichage de la valeur de cette vitesse limite vl, de préférence en vert dans la réalité (et ici en gris moyen sur le dessin en noir et blanc). Dans l'exemple illustré non limitativement sur la figure 4, la vitesse limite vl affichée est égale à 30 km/h.

On notera également que dans l'étape du procédé on (le processeur PR) peut déterminer et choisir le conseil de conduite du véhicule V soit à une vitesse limite vl, soit à une vitesse non fixe du fait qu'elle est comprise dans un intervalle iv qui est borné par une vitesse minimale, strictement inférieure à la vitesse limite vl, et par cette vitesse limite vl (comme illustré sur la figure 4). Dans le cas d'une détermination d'un intervalle iv, on peut matérialiser ce dernier (iv) sur un cadran affiché et représentatif des vitesses (comme illustré sur la figure 4), éventuellement avec l'affichage complémentaire de la vitesse limite vl constituant sa borne supérieure (comme illustré sur la figure 4). Dans l'exemple illustré non limitativement sur la figure 4, l'intervalle iv s'étend entre 15 km/h et 30 km/h (vl).

On notera que sur la figure 4, le compteur de vitesse est affiché avec en son centre la vitesse en cours vv du véhicule V (ici égale à 30 km/h), de façon optionnelle. Par ailleurs, et comme illustré non limitativement sur la figure 4, on peut également afficher à côté du compteur de vitesse la vitesse maximale autorisée vma (par exemple au centre d'un cercle dont le pourtour est rouge dans la réalité (et ici en gris clair sur le dessin en noir et blanc). On notera aussi que le compteur de vitesse, avec ou sans la matérialisation de la vitesse maximale autorisée vma, peut être affiché sur le même écran que celui sur lequel sont affichées les matérialisations des phases de lumière en cours et future, l'information comportementale ic et l'éventuelle distance dvf, ou bien sur un écran différent.

On notera également, bien que cela n'apparaisse pas sur les figures 2 à 4, que dans l'étape du procédé on peut aussi afficher la durée restante dr de la phase de lumière en cours du feu tricolore FT, lorsque la législation le permet. C'est toujours le processeur PR qui déclenche cet affichage.

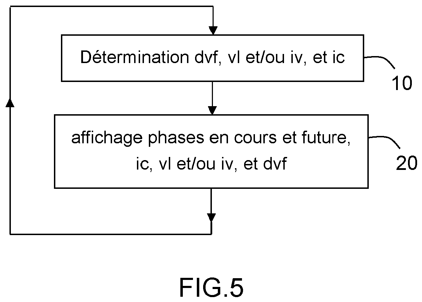

On a schématiquement illustré sur la figure 5 un exemple d'algorithme mettant en oeuvre le procédé d'assistance décrit ci-avant.

Dans une première sous-étape 10 on (le processeur PR) détermine au moins la distance dvf séparant le véhicule V d'un feu tricolore FT, une vitesse limite vl pour rejoindre ce feu tricolore FT, et une information comportementale ic représentative d'un conseil de comportement de conduite à suivre pour franchir ce feu tricolore FT.

Dans une seconde sous-étape 20 on affiche sur au moins un écran EA embarqué dans le véhicule V la phase de lumière en cours du feu tricolore FT, la future phase de lumière du feu tricolore FT, l'information comportementale ic déterminée et associée à ce feu tricolore FT (avec éventuellement la vitesse limite vl et/ou l'intervalle de vitesse iv), et l'éventuelle distance dvf associée à ce feu tricolore FT.

On notera également que l'invention propose aussi un produit programme d'ordinateur comprenant un jeu d'instructions qui, lorsqu'il est exécuté par des moyens de traitement de type circuits électroniques (ou hardware), comme par exemple au moins le processeur PR, est propre à mettre en oeuvre le procédé d'assistance décrit ci-avant pour assister à la conduite du véhicule V lors d'un franchissement de feu tricolore FT associé à la voie de circulation VC1 sur laquelle circule ce véhicule V.

On notera également que sur la figure 1 le dispositif d'assistance DA est très schématiquement illustré avec seulement son processeur PR. Ce dispositif d'assistance DA peut prendre la forme d'un boitier comprenant des circuits imprimés, ou bien de plusieurs circuits imprimés reliés par des connections filaires ou non filaires. On entend par circuit imprimé tout type de dispositif apte à effectuer au moins une opération électrique ou électronique. Comme évoqué plus haut, ce dispositif d'assistance DA comprend au moins un processeur PR, par exemple de signal numérique (ou DSP (Digital Signal Processor)), ainsi qu'une mémoire vive pour stocker des instructions pour la mise en oeuvre par ce processeur PR du procédé d'assistance tel que décrit ci-avant, et une éventuelle mémoire de masse pour le stockage de données destinées à être conservées après la mise en oeuvre du procédé d'assistance. Le processeur de signal numérique PR reçoit au moins les informations de signalisation des feux tricolores FT, la vitesse en cours vv du véhicule V, ainsi que d'éventuelles informations de navigation issues du dispositif d'aide à la navigation DAN, pour les analyser et effectuer des calculs, éventuellement après les avoir mis en forme et/ou démodulés et/ou amplifiés, de façon connue en soi. Le dispositif d'assistance DA peut également comporter une interface d'entrée pour la réception d'au moins les informations de signalisation des feux tricolores FT, la vitesse en cours vv, et d'éventuelles informations de navigation, et une interface de sortie pour la transmission des résultats de ses analyses et calculs.

Une ou plusieurs sous-étapes de l'étape du procédé d'assistance peuvent être effectuées par des composants différents. Ainsi, le procédé d'assistance peut-être mis en oeuvre par une pluralité de processeurs, mémoire vive, mémoire de masse, interface d'entrée, interface de sortie et/ou processeur de signal numérique, éventuellement répartis dans des équipements différents embarqués de façon permanente ou temporaire (comme par exemple un smartphone). Dans ces situations, le dispositif d'assistance DA peut-être décentralisé, au sein d'un réseau local (plusieurs processeurs reliés entre eux par exemple) ou d'un réseau étendu ou encore d'une combinaison d'équipement(s) d'un réseau et d'équipement(s) indépendants.

L'affichage d'informations relatives aux états en cours et futur du prochain feu tricolore et d'une information comportementale relative à la conduite, permet au conducteur d'adapter sa vitesse en fonction du contexte, en toute sécurité. Il en résulte une réduction de l'attente aux feux tricolores (et donc une réduction des embouteillages), une amélioration du confort de conduite, une réduction de la consommation d'énergie, une réduction de l'usure du véhicule, une réduction de l'usure des plaquettes et disques de frein, une réduction de l'usure des pneus, et une réduction du nombre d'accidents.

## Revendications

1. Procédé d'assistance à la conduite d'un véhicule (V) comprenant un module de communication (MCV) échangeant des messages par voie d'ondes et se déplaçant sur une voie de circulation (VCj) ayant une vitesse maximale autorisée et comprenant un feu tricolore (FT) comportant un module de communication (MCF) émettant par voie d'ondes des messages contenant des informations définissant les durées respectives de trois phases de lumières rouge, verte et orange et la durée restante de la phase de lumière en cours, ledit procédé comprenant une étape dans laquelle on affiche sur au moins un écran (EA) embarqué dans ledit véhicule (V) la phase de lumière en cours dudit feu tricolore (FT),
dans laquelle on détermine une information comportementale représentative d'un conseil de comportement de conduite à suivre pour franchir ledit feu tricolore (FT), compte tenu d'une distance séparant ledit véhicule (V) dudit feu tricolore (FT), de ladite durée restante de la phase de lumière en cours et de ladite vitesse maximale autorisée, et on affiche en outre, à proximité de ladite phase de lumière en cours du feu tricolore (FT), ladite information comportementale déterminée et une future phase de lumière qu'aura ledit feu tricolore (FT) quand ledit véhicule (V) parviendra au niveau de ce dernier (FT) si ledit conseil de comportement est respecté, et
dans laquelle on affiche ladite information comportementale déterminée entre lesdites phases de lumière en cours et future du feu tricolore (FT).

2. Procédé selon la revendication 1, **caractérisé en ce que** dans ladite étape on affiche en outre ladite distance à proximité desdites phases de lumière en cours et future du feu tricolore (FT) et de ladite information comportementale déterminée.

3. Procédé selon l'une des revendications 1 à 2, **caractérisé en ce que** dans ladite étape on détermine une information comportementale choisie parmi un conseil de poursuite de conduite à la vitesse en cours dudit véhicule (V) pour franchir ledit feu tricolore (FT) dans une phase de lumière verte sans arrêter ledit véhicule (V), un conseil d'arrêt dudit véhicule (V) audit feu tricolore (FT) dans une phase de lumière rouge, et un conseil de conduite dudit véhicule (V) à une vitesse au plus égale à une vitesse limite inférieure à ladite vitesse maximale autorisée.

4. Procédé selon la revendication 3, **caractérisé en ce que** dans ladite étape on détermine un conseil de conduite dudit véhicule (V) à une vitesse comprise dans un intervalle borné par une vitesse minimale, strictement inférieure à ladite vitesse limite, et par ladite vitesse limite.

5. Procédé selon l'une des revendications 1 à 4, **caractérisé en ce que** dans ladite étape on affiche ladite information comportementale sur une flèche épaisse remplie d'une couleur identique à celle de ladite future phase de lumière.

6. Procédé selon l'une des revendications 1 à 5, **caractérisé en ce que** dans ladite étape on affiche aussi ladite durée restante de la phase de lumière en cours dudit feu tricolore (FT).

7. Produit programme d'ordinateur comprenant un jeu d'instructions qui, lorsqu'il est exécuté par des moyens de traitement, est propre à mettre en oeuvre le procédé d'assistance selon l'une des revendications précédentes pour assister à la conduite d'un véhicule (V) lors d'un franchissement de feu tricolore (FT) associé à une voie de circulation (VCj) sur laquelle circule ce véhicule (V).

8. Dispositif (DA) d'assistance à la conduite d'un véhicule (V) comprenant un module de communication (MCV) échangeant des messages par voie d'ondes et se déplaçant sur une voie de circulation (VCj) ayant une vitesse maximale autorisée et comprenant un feu tricolore (FT) comportant un module de communication (MCF) émettant par voie d'ondes des messages contenant des informations définissant les durées respectives de trois phases de lumières rouge, verte et orange et la durée restante de la phase de lumière en cours, ledit dispositif (DA) comprenant au moins un processeur (PR) déclenchant l'affichage de la phase de lumière en cours dudit feu tricolore (FT) par au moins un écran (EA) présent dans ledit véhicule (V), ledit processeur (PR) déterminant aussi une information comportementale représentative d'un conseil de comportement de conduite à suivre pour franchir ledit feu tricolore (FT), compte tenu de ladite distance, de ladite durée restante de sa phase de lumière en cours et de ladite vitesse maximale autorisée, et déclenche aussi l'affichage par ledit écran (EA), à proximité de ladite phase de lumière en cours du feu tricolore (FT), de ladite information comportementale déterminée et d'une future phase de lumière qu'aura ledit feu tricolore (FT) quand ledit véhicule (V) parviendra au niveau de ce dernier (FT) si ledit conseil de comportement est respecté, ledit processeur (PR) déclenchant l'affichage de de ladite information comportementale déterminée entre les dites phases de lumière en cours et future du feu tricolore (FT).

9. Véhicule (V) comprenant un module de communication (MCV) échangeant des messages par voie d'ondes et se déplaçant sur une voie de circulation (VCj) ayant une vitesse maximale autorisée et comprenant un feu tricolore (FT) comportant un module de communication (MCF) émettant par voie d'ondes des messages contenant des informations définissant les durées respectives de trois phases de lumières rouge, verte et orange et la durée restante de la phase de lumière en cours, **caractérisé en ce qu'**il comprend en outre un dispositif d'assistance (DA) selon la revendication 8.

## Patentansprüche

1. Verfahren zur Unterstützung des Fahrers eines Fahrzeugs (V), das ein Kommunikationsmodul (MCV) umfasst, das Nachrichten über Wellen austauscht und sich auf einer Fahrspur (VCj) mit einer zulässigen Höchstgeschwindigkeit bewegt und eine Ampel (FT) umfasst, die ein Kommunikationsmodul (MCF) umfasst, das über Wellen Nachrichten aussendet, die Informationen enthalten, die die jeweiligen Dauern von drei roten Lichtphasen definieren, Grün und Orange und die verbleibende Dauer der aktuellen Lichtphase, wobei das Verfahren einen Schritt umfasst, in dem auf mindestens einem Bildschirm (EA), der in dem Fahrzeug (V) eingebaut ist, die aktuelle Lichtphase der Ampel (FT) angezeigt wird, in dem eine Verhaltensinformation bestimmt wird, die repräsentativ für eine Verhaltensempfehlung für das Fahren ist, das zum Überqueren der Ampel (FT) zu befolgen ist, unter Berücksichtigung einer Entfernung zwischen dem Fahrzeug (V) und der Ampel (FT), der verbleibenden Dauer der aktuellen Lichtphase und der zulässigen Höchstgeschwindigkeit, und außerdem in der Nähe der aktuellen Lichtphase der Ampel (FT) angezeigt wird, die ermittelte Verhaltensinformation und eine zukünftige Lichtphase, die die Ampel (FT) haben wird, wenn das Fahrzeug (V) an der Ampel (FT) ankommt, wenn der Verhaltenshinweis befolgt wird, und wobei die ermittelte Verhaltensinformation zwischen der aktuellen und der zukünftigen Lichtphase der Ampel (FT) angezeigt wird.

2. Verfahren nach Anspruch 1, **dadurch gekennzeichnet, dass** in dem Schritt außerdem der Abstand in der Nähe der aktuellen und zukünftigen Lichtphasen der Ampel (FT) und der ermittelten Verhaltensinformation angezeigt wird.

3. Verfahren nach einem der Ansprüche 1 bis 2, **dadurch gekennzeichnet, dass** in dem Schritt eine Verhaltensinformation bestimmt wird, die ausgewählt ist aus einer Empfehlung zur Weiterfahrt mit der aktuellen Geschwindigkeit des Fahrzeugs (V), um die Ampel (FT) in einer grünen Lichtphase zu überqueren, ohne das Fahrzeug (V) anzuhalten, einer Empfehlung zum Anhalten des Fahrzeugs (V) an der Ampel (FT) in einer roten Lichtphase und einer Empfehlung zum Fahren des Fahrzeugs (V) mit einer Geschwindigkeit, die höchstens gleich einer Grenzgeschwindigkeit ist, die niedriger als die zulässige Höchstgeschwindigkeit ist.

4. Verfahren nach Anspruch 3, **dadurch gekennzeichnet, dass** in diesem Schritt ein Ratschlag zum Fahren des Fahrzeugs (V) mit einer Geschwindigkeit bestimmt wird, die in einem Intervall enthalten ist, das durch eine Mindestgeschwindigkeit, die strikt unter der Grenzgeschwindigkeit liegt, und durch die Grenzgeschwindigkeit begrenzt wird.

5. Verfahren nach einem der Ansprüche 1 bis 4, **dadurch gekennzeichnet, dass** man in diesem Schritt die Verhaltensinformation auf einem dicken Pfeil anzeigt, der mit einer Farbe gefüllt ist, die mit derjenigen der zukünftigen Lichtphase identisch ist.

6. Verfahren nach einem der Ansprüche 1 bis 5, **dadurch gekennzeichnet, dass** in diesem Schritt auch die verbleibende Dauer der aktuellen Lichtphase der Ampel (FT) angezeigt wird.

7. Computerprogrammprodukt mit einem Befehlssatz, der, wenn er von Verarbeitungsmitteln ausgeführt wird, geeignet ist, das Unterstützungsverfahren nach einem der vorhergehenden Ansprüche umzusetzen, um das Fahren eines Fahrzeugs (V) bei der Überquerung einer Ampel (FT) zu unterstützen, die einer Fahrspur (VCj) zugeordnet ist, auf der dieses Fahrzeug (V) fährt.

8. Vorrichtung (DA) zur Unterstützung des Fahrers eines Fahrzeugs (V), das ein Kommunikationsmodul (MCV) umfasst, das über Wellen Nachrichten austauscht und sich auf einer Fahrspur (VCj) mit einer zulässigen Höchstgeschwindigkeit bewegt und eine Ampel (FT) umfasst, die ein Kommunikationsmodul (MCF) umfasst, das über Wellen Nachrichten aussendet, die Informationen enthalten, die die jeweiligen Dauern von drei Rotlichtphasen, einer Rotlichtphase, einer Grünlichtphase und einer Grünlichtphase definieren, grün und orange und die verbleibende Dauer der aktuellen Lichtphase, wobei die Vorrichtung (DA) mindestens einen Prozessor (PR) umfasst, der die Anzeige der aktuellen Lichtphase der Ampel (FT) durch mindestens einen Bildschirm (EA) auslöst, der in dem Fahrzeug (V) vorhanden ist, der Prozessor (PR) auch eine Verhaltensinformation bestimmt, die repräsentativ für einen Ratschlag für das Fahrverhalten ist, das beim Überqueren der Ampel (FT) unter Berücksichtigung der Entfernung, der Restdauer ihrer aktuellen Lichtphase und der zulässigen Höchstgeschwindigkeit zu befolgen ist, und auch die Anzeige durch den Bildschirm (EA) in der Nähe der aktuellen Lichtphase der Ampel (FT) auslöst, der ermittelten Verhaltensinformation und einer zukünftigen Lichtphase, die die Ampel (FT) haben wird, wenn das Fahrzeug (V) an der Ampel (FT) ankommt, wenn der Verhaltenshinweis befolgt wird, wobei der Prozessor (PR) die Anzeige der ermittelten Verhaltensinformation zwischen der aktuellen und der zukünftigen Lichtphase der Ampel (FT) veranlasst.

9. Fahrzeug (V) mit einem Kommunikationsmodul (MCV), das Nachrichten über Wellen austauscht und sich auf einer Fahrspur (VCj) mit einer zulässigen Höchstgeschwindigkeit bewegt und eine Ampel (FT) mit einem Kommunikationsmodul (MCF) umfasst, das über Wellen Nachrichten aussendet, die Informationen enthalten, welche die jeweiligen Dauern von drei Lichtphasen Rot, Grün und Orange und die verbleibende Dauer der aktuellen Lichtphase definieren, **dadurch gekennzeichnet, dass** es außerdem eine Hilfsvorrichtung (DA) nach Anspruch 8 umfasst.

## Claims

1. Method for assisting the driving of a vehicle (V) comprising a communication module (MCV) exchanging messages by means of waves and moving on a traffic lane (VCj) having a maximum authorised speed and comprising a traffic light (FT) comprising a communication module (MCF) transmitting by means of waves messages containing information defining the respective durations of three phases of red, green and amber light and the remaining duration of the current phase of light, said method comprising a step in which the current phase of light of said communication module is displayed on at least one screen (EA) on board said vehicle (V), green and amber light phases and the remaining duration of the current light phase, said method comprising a step in which the current light phase of said traffic light (FT) is displayed on at least one screen (EA) on board said vehicle (V), in which behavioural information representative of a driving behaviour advice to be followed to pass said traffic light (FT) is determined, taking into account a distance separating said vehicle (V) from said traffic light (FT), said remaining duration of the current light phase and said maximum authorised speed, and in which said determined behavioural information and a future driving behaviour advice to be followed to pass said traffic light (FT) are displayed in the vicinity of said current light phase of the traffic light (FT), said determined behavioural information and a future light phase that said traffic light (FT) will have when said vehicle (V) arrives at the latter (FT) if said behavioural advice is respected, and wherein said determined behavioural information is displayed between said current and future light phases of the traffic light (FT).

2. Method according to claim 1, **characterized in that** in said step said distance in the vicinity of said current and future light phases of the traffic light (FT) and said determined behavioural information is further displayed.

3. Method according to one of claims 1 to 2, **characterized in that** in said step a behavioural information is determined selected among a driving continuation advice at the current speed of said vehicle (V) to pass said traffic light (FT) in a green light phase without stopping said vehicle (V), a stopping advice of said vehicle (V) at said traffic light (FT) in a red light phase, and a driving advice of said vehicle (V) at a speed at the most equal to a limit speed lower than said maximum allowed speed.

4. Method according to claim 3, **characterised in that** in the said step an advice to drive the said vehicle (V) at a speed comprised in an interval bounded by a minimum speed, strictly lower than the said limit speed, and by the said limit speed is determined.

5. Method according to one of claims 1 to 4, **characterised in that** in said step said behavioural information is displayed on a thick arrow filled with a colour identical to that of said future light phase.

6. Method according to any of the claims 1 to 5, **characterised in that** in said step said remaining duration of the current light phase of said traffic light (FT) is also displayed.

7. Computer program product comprising a set of instructions which, when executed by processing means, is suitable for implementing the assistance method according to one of the preceding claims to assist the driving of a vehicle (V) when passing a traffic light (FT) associated with a traffic lane (VCj) on which this vehicle (V) is travelling.

8. Device (DA) for assisting the driving of a vehicle (V) comprising a communication module (MCV) exchanging messages by means of waves and moving on a traffic lane (VCj) having a maximum authorised speed and comprising a traffic light (FT) comprising a communication module (MCF) transmitting by means of waves messages containing information defining the respective durations of three phases of red, green and amber lights and the remaining duration of the light, green and amber light phases and the remaining duration of the current light phase, said device (DA) comprising at least one processor (PR) triggering the display of the current light phase of said traffic light (FT) by at least one screen (EA) present in said vehicle (V), said processor (PR) also determining behavioural information representative of a driving behaviour advice to be followed to pass said traffic light (FT), taking into account said distance, said remaining duration of its current light phase and said maximum authorised speed, and also triggers the display by said screen (EA), in the vicinity of said current light phase of the traffic light (FT) of said determined behavioural information and of a future light phase that said traffic light (FT) will have when said vehicle (V) reaches the level of the latter (FT) if said behavioural advice is respected, said processor (PR) triggering the display of said determined behavioural information between said current and future light phases of the traffic light (FT).

9. Vehicle (V) comprising a communication module (MCV) exchanging messages by means of waves and moving on a traffic lane (VCj) having a maximum authorised speed and comprising a traffic light (FT) having a communication module (MCF) transmitting by means of waves messages containing information defining the respective durations of three phases of red, green and amber lights and the remaining duration of the current light phase, **characterised in that** it further comprises an assistance device (DA) according to claim 8.
